# EUROPÄISCHE PATENTSCHRIFT

(11) **EP 0 902 863 B1**
(45) Veröffentlichungstag und Bekanntmachung des Hinweises auf die Patenterteilung: **04.06.2003**
(21) Anmeldenummer: 98916818.2
(22) Anmeldetag: 03.03.1998
(51) Int. Cl.: F02P 5/152

(54) **VERFAHREN ZUR KLOPFREGELUNG IN MEHRZYLINDER-BRENNKRAFTMASCHINEN**
METHOD FOR CONTROLLING KNOCKING IN MULTICYLINDER INTERNAL COMBUSTION ENGINES
PROCEDE DE REGLAGE DU CLIQUETIS DANS LES MOTEURS A COMBUSTION INTERNE A CYLINDRES MULTIPLES

(30) Priorität: 07.03.1997 DE 19709395
(43) Veröffentlichungstag der Anmeldung: 24.03.1999
(73) Patentinhaber: ROBERT BOSCH GMBH, 70442 Stuttgart (DE)
(72) Erfinder: ENTENMANN, Robert, D-71726 Benningen (DE); UNLAND, Stefan, D-71665 Vaihingen-Kleinglattbach (DE); HAEMING, Werner, D-74861 Neudenau (DE); SURJADI, Iwan, D-71665 Vaihingen (DE); FRANKE, Steffen, D-71701 Schwieberdingen (DE)
(86) Internationale Anmeldenummer: DE9800603
(87) Internationale Veröffentlichungsnummer: WO98040625

(56) Entgegenhaltungen:
- EP-A- 0 275 169
- FR-A- 2 475 136
- FR-A- 2 510 669
- US-A- 4 211 194
- US-A- 4 893 244

## Beschreibung

### Stand der Technik

Aus der FR 2475136 ist ein Verfahren zur Klopfregelung bekannt bei dem ein Zylinder näher an der Klopfgrenze betrieben wird. Weitere Verfahren zur Klopfregelung sind aus der US 4893244 und der EP 275169 bekannt.Aus dem Handbuch "Autoelektrik/Autoelektronik am Ottomotor/Bosch (1. Ausgabe VDI-Verlag 1987, ISBN 3-18-419 106-0) ist es bekannt, daß der Betrieb einer Brennkraftmaschine für ein optimales Drehmoment möglichst dicht an der Klopfgrenze erfolgen soll. Klopfen ist eine unkontrollierte Form der Verbrennung und kann im Motor zu Schäden führen. Aus diesem Grund wird der Zündwinkel normalerweise so ausgelegt, daß er immer einen Sicherheitsabstand zur Klopfgrenze aufweist. Da aber die Klopfgrenze von der Kraftstoffqualität, dem Motorzustand und den Umweltbedingungen abhängig ist, kann durch den Sicherheitsabstand der späten Zündwinkel eine Verschlechterung im Benzinverbrauch auftreten. Man ist deshalb bestrebt, die Klopfgrenze während des Betriebes zu erfassen und den Zündwinkel möglichst dicht an diese Klopfgrenze heranzulegen. Um einen Betrieb möglichst dicht an der Klopfgrenze zu gewährleisten, sind Klopfsensoren vorgesehen, die Klopfen erfassen und ein entsprechendes Signal an das Steuergerät weitergeben. Üblicherweise ist ein Klopfsensor für mehrere Zylinder vorgesehen, der dann die Klopfgeräusche in diesen Zylindern erfaßt. Bei Brennkraftmaschinen mit hoher Zylinderzahl oder ungünstiger Anordnung der Zylinder werden zum Beispiel aufgrund des Anbauortes der Klopfsensoren nicht alle Zylinder von dem Klopfsensor gleich gut gehört. In diesen Fällen können zwei Klopfsensoren pro Motor verwendet werden, um möglichst die Geräusche in allen Zylindern gut auswerten zu können.

### Vorteile der Erfindung

Das erfindungsgemäße Verfahren zur Klopfregelung mit den kennzeichnenden Merkmalen des Hauptanspruchs hat gegenüber dem Bekannten den Vorteil, daß auch in Mehrzylinder-Brennkraftmaschinen eine Klopfregelung für alle Zylinder auch dann durchgeführt werden kann, wenn jeweils einer Gruppe von Zylindern nur ein Klopfsensor zugeordnet ist und nicht alle Zylinder vom Klopfsensor gleich gut gehört werden. Im normalen Betrieb der Brennkraftmaschine wird aufgrund der Klopfereignisse in den einzelnen Zylindern eine zylinderindividuelle Klopfregelung durchgeführt. In bestimmten Betriebsbereichen wie zumindest bei sehr hoher Drehzahl schaltet man auf die Klopfregelung mit einem Leitzylinder um. Die Verwendung nur eines Klopfsensors für eine Gruppe von mehreren Zylindern hat außerdem den Vorteil, daß nur das Signal des einen Klopfsensors ausgewertet werden muß und daß damit der Aufwand der Auswertung reduziert wird, wodurch wiederum Rechnerkapazität frei wird. Die Auswahl mindestens eines Zylinders aus einer Gruppe von Zylindern als einen oder mehrere Leitzylinder, wobei der oder die ausgewählten Zylinder vorzugsweise der oder die vom Klopfsensor am besten gehörten Zylinder der Zylindergruppe bzw. der oder die Zylinder mit der größten Klopfhäufigkeit sind, hat den Vorteil, daß ein Klopfen in diesem oder diesen Zylindern eine Klopfregelung für alle Zylinder ermöglicht. Die anderen Zylinder der Zylindergruppe werden als geführte Zylinder aufgrund der Klopfereignisse in dem oder den Leitzylindern an der Klopfgrenze entlanggeführt. Damit ist noch besser ein klopffreier Betrieb der Brennkraftmaschine an der Klopfgrenze gegeben. Ein weiterer Vorteil ist dadurch gegeben, daß ein erkanntes Klopfen in einem der geführten Zylinder nur eine Klopfverstellung in diesem Zylinder bewirkt. Damit wird vermieden, daß ein Verstellung der Zündung, was zu einer Zürücknahme des Drehmomentes führt, in allen Zylindern ausgelöst wird.

Durch die in den Unteransprüchen aufgeführten Maßnahmen sind vorteilhafte Weiterbildungen und Verbesserungen des im Hauptanspruch angegebenen Verfahrens möglich. Besonders vorteilhaft ist, die Spätverstellung des geführten Zylinders in mehreren Schritten vorzunehmen, da so starke Drehmomentensprünge vermieden werden. Letztendlich ist es von Vorteil, die geführten Zylinder gegenüber dem Leitzylinder mit einem Sicherheits-Offset im Zündwinkel-Spätverstellwert zu beaufschlagen, da in diesen geführten Zylindern dann die Klopfneigung gegenüber den unmittelbar an der Klopfgrenze betriebenen Leitzylindern herabgesetzt ist.

### Zeichnung

Ausführungsbeispiele der Erfindung sind in der Zeichnung dargestellt und in der nachfolgenden Beschreibung näher erläutert. Es zeigen
Figur 1 den Prinzipaufbau einer Zündanlage zur Klopfregelung,
Figur 2 die Zündwinkelverläufe eines Leit- und eines geführten Zylinders über die Zeit und
Figur 3 die einzelnen Verfahrensschritte in einem Programmablauf.

### Beschreibung der Ausführungsbeispiele

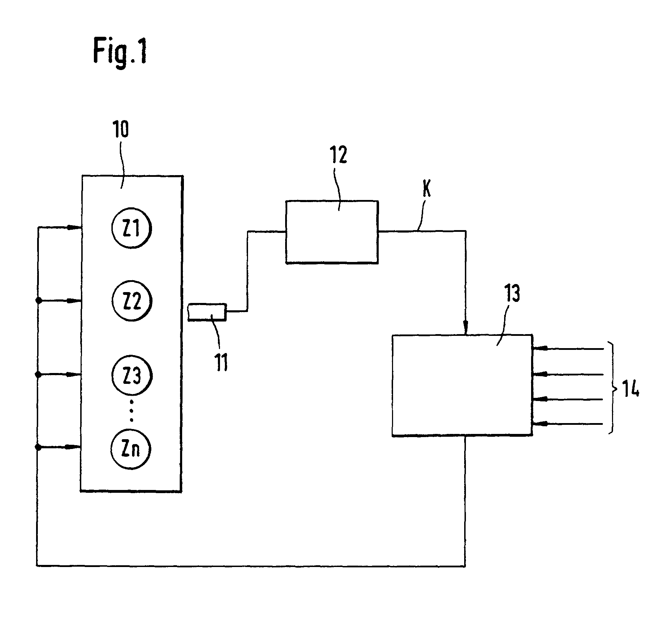

Figur 1 zeigt schematisch einen Mehrzylinder-Motorblock 10, wobei dem Mehrzylinder-Motorblock 10 ein Klopfsensor 11 zugeordnet ist. Als Klopfsensor kann beispielsweise ein Körperschallsensor oder ein Zylinderdrucksensor verwendet werden. Das Signal des Klopfsensors 11 ist an einer Klopfauswerteschaltung 12 geführt, welche wiederum mit einem Steuergerät 13 verbunden ist. Das Steuergerät 13 berechnet aufgrund der von Sensoren erfaßten Eingangsgrößen 14, wie der Drehzahl, der Last, der Versorgungsspannung oder des Saugrohrdruckes einen aktuellen Kennfeldzündwinkel KZW oder Zündzeitpunkt ZZP. Die Klopfsensorauswerteschaltung 12 gibt beim Auftreten von Klopfen ein entsprechendes Signal KL an das Steuergerät 13 aus. Im Steuergerät wird nach Auftreten von Klopfen eine Verstellung des Kennfeldzündwinkels KZW oder des Kennfeldzündzeitpunktes KZZP in Richtung spät bewirkt, wobei in der folgenden Beschreibung lediglich auf die Verschiebung des Zündwinkels beschrieben wird. Die Verstellung des Zündzeitpunktes würde aber in analogen Schritten lediglich in der Zeitebene erfolgen. Dieser Vorgang wiederholt sich bei jeder als Klopfen erkannten Verbrennung für einen Zylinder. Tritt kein Klopfen mehr auf, so wird der vorher spät verstellte Zündwinkel langsam in kleinen Schritten in Richtung früh bis auf seinen Kennfeldwert zurückgeführt. Die Rückführung des Zündwinkels erfolgt hierbei erst nach einer vorgebbaren Anzahl n von klopffreien Verbrennungen (KL-frei).

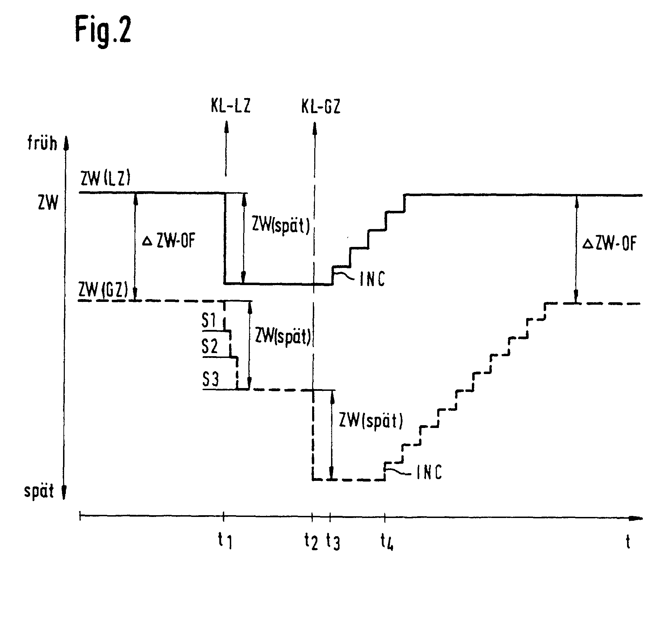

In Figur 2 sind für den Fall, daß nur ein Zylinder als Leitzylinder dient, die verschiedenen Zündwinkelverläufe des Leitzylinders LZ und der anderen geführten Zylinder GZ bei klopfenden und nicht klopfendem Betrieb dargestellt. In Figur 2 ist mit dem Signalverlauf ZW(LZ) der Zündwinkel eines Leitzylinders dargestellt. Ein Leitzylinder LZ ist ein aus einer Gruppe von Zylindern beispielsweise den Zylindern eines Motorblockes oder einer Zylinderbank ausgewählter Zylinder. Für das erfindungsgemäße Verfahren werden beim gewählten Leitzylinder LZ die Verbrennungsbedingungen gezielt so vorverändert, daß dieser Zylinder zuerst klopft. Damit ist der Leitzylinder LZ der Zylinder mit der größten Klopfneigung. Mit der gestrichelten Linie ist der Zündwinkel ZW-GZ eines geführten Zylinders dargestellt. Ein geführter Zylinder GZ wird beispielsweise aufgrund des Anbauortes des Klopfsensors weniger gut gehört, so daß ein Klopfen in einem geführten Zylinder GZ unter Umständen nicht als Klopfen erkannt wird. Um eine Klopfregelung auch in den geführten Zylindern GZ zu gewährleisten erfolgt die Klopfregelung für alle Zylinder aufgrund der Klopfereignisse im Leitzylinder LZ in der Art, daß beim Auftreten von Klopfen im Leitzylinder KL-LZ in allen Zylindern der Zylindergruppe, also auch in den geführten Zylinder GZ eine Spätverstellung des Zündwinkels erfolgt. In der Figur 2 tritt zum Zeitpunkt t₁ ein Klopfereignis im Leitzylinder KL-LZ auf. Mit dem Klopfereignis KL erfolgt eine Spätverstellung ZW(spät) des Zündwinkels des Leitzylinders ZW(LZ). Gleichzeitig wird der Zündwinkel der anderen Zylinder ZW(GZ) nach spät verstellt. Es ist vorteilhaft, die Spätverstellung in den geführten Zylinder in mehreren Schritten sl bis s3 durchzuführen, wie dies in Figur 2 mit der zum Zeitpunkt t₁ beginnenden Spätverstellung der Zündwinkel der geführten Zylinder ZW(GZ) dargestellt ist. Dadurch treten keine großen Drehmomentensprünge auf, wodurch ein ruhiger Motorlauf und damit ein höherer Fahrkomfort gegeben ist. Die in mehreren Schritten sl,s2, s3 erfolgende Spätverstellung der geführten Zylinder GZ nach einem Klopfen eines Leitzylinders KL-LZ wird so lange durchgeführt, bis der Sicherheits-Offset ΔZW-OF des Zündwinkels der geführten Zylinder GZ zum Zündwinkel des Leitzylinders ZW(LZ) wieder hergestellt ist. Dieses Sicherheits-Offsetz ΔZW-OF kann in Abhängigkeit von Parametern des Brennkraftmaschine wie Motortemperatur, Last, Drehzahl und aktueller Spätverstellung des Leitzylinders bestimmt werden. Nach einer vorgebbaren Anzahl von klopffreien Verbrennungen (nKL-frei) erfolgt eine schrittweise Rückführung der nach 'spät' verstellten Zündwinkel für alle Zylinder. Die Rückführung des Zündwinkel für alle Zylinder erfolgt schrittweise, wobei der Zündwinkel des Leitzylinders bis an den Kennfeldzündwinkel herangeführt wird und die anderen Zylinder einen Sicherheitsabstand ZW-OF zum Zündwinkel des Leitzylinders einhalten. In Figur 2 beginnt zum Zeitpunkt t₃ die Rückführung des Zündwinkels des Leitzylinders. In einem geführten Zylinder GZ ist zum Zeitpunkt t₂ ein Klopfereignis KL-GZ aufgetreten. Es erfolgt nun eine Spätverstellung des Zündwinkels des geführten Zylinders ZW(GZ) in einem einzigen Schritt in Richtung 'spät'. Diese Spätverstellung des Zündwinkels des einen geführten Zylinders ZW-GZ, in welchem das Klopfen zum Zeitpunkt t₂ aufgetreten ist, wird auch nur in dem geführten Zylinder durchgeführt, in welchem das Klopfereignis aufgetreten ist. Anschließend wird auch für diesen geführten Zylinder der Zündwinkels nach einer vorgebbaren Anzahl n von klopffreien Verbrennungen KL-frei zum Zeitpunkt t₄ in Richung 'früh' auf den Kennfeldzündwinkel zurückgeführt. Diese Beschreibung der Zündwinkelverstellung für die einzelnen Zylinder gilt ananlog, wenn der Leit- oder Führungszundwinkel FZW aus den Zündwinkeln mehrerer Leitzylinder einer Gruppe von Zylindern ermittelt wird. Der Sicherheits-Offset ΔZW-OF der geführten Zylinder GZ bezieht sich dann auf den Abstand zum Führungs- oder Leitzündwinkel FZW.

Wie bereits weiter oben ausgeführt, erfolgt für den mindestens einen gewählten Leitzylinder LZ eine gezielte Vorveränderung der Verbrennungsbedingungen so, daß der mindestens eine Leitzylinder im klopfgefährdeten Betrieb zuerst klopft. Diese gezielte Vorveränderung der Verbrennungsbedingungen bedeutet beispielsweise, daß entweder der auszugebende Zündwinkel für den Leitzylinder in Richtung Klopfgrenze hin verändert wird oder daß, wie zu Figur 2 beschrieben, für die anderen geführten Zylinder die Zündwinkel im Vergleich zum Führungs- oder Leitzündwinkel FZW des mindestens einen Leitzylinders um den Sicherheitsoffset von der Klopfgrenze weg verändert werden. Bei einer Veränderung der Steuergrößen für die anderen geführten Zylinder GZ wird zunächst vom Steuergerät der Zündwinkel für den Leitzylinder möglichst dicht an der Klopfgrenze bestimmt und dann auf diesen Zündwinkel ein Sicherheits-Offset ΔZW-OF aufaddiert. Damit stellt dieser Sicherheits-Offset ΔZW-OF den Sicherheitsabstand zur Klopfgrenze dar. Auch bei der Rücknahme der Spätverstellung des Zündwinkels Richtung Kennfeldzündwinkel nach einer vorgebbaren Anzahl n klopffreier Verbrennungen wird dieser Sicherheits-Offset ΔZW-OF des Zündwinkels der geführten Zylinder zum Führungsoder Leitzündwinkel FZW des mindestens einen Leitzylinders eingehalten. Die Rückführung des Zündwinkels für einen geführten Zylinder in Richtung Kennfeldzündwinkel KZW ist beendet, wenn der Zündwinkel dieses geführten Zylinders sich vom Führungs- oder Leitzündwinkel FZW des mindestens einen Leitzylinders um den Betrag des Sicherheits-Offsets ΔZW-OF unterscheidet.

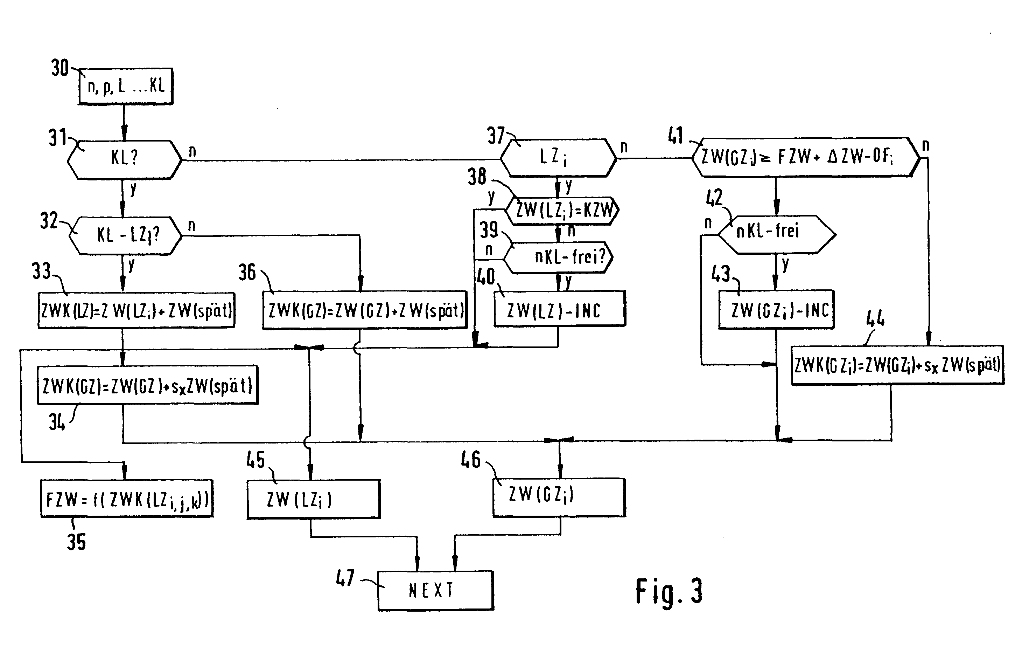

In Figur 3 sind die einzelnen Verfahrensschritte zur Durchführung des erfindungsgemäßen Verfahrens in einem Programmablauf dargestellt. In einem ersten Verfahrensschritt 30 werden die aktuellen Betriegsparameter der Brennkraftmaschine wie Drehzahl n, Last L, Druck p und auch das Klopfersignal K erfaßt. Anschließend wird im Verfahrensschritt 31 geprüft, ob ein Klopfereignis KL ermittelt wurde. Ist ein Klopfereignis KL aufgetreten, dann führt der JA-Ausgang des Verfahrensschrittes 31 an einen Verfahrensschritt 32, in welchem geprüft wird, ob das erkannte Klpfereignis in einem Leitzylinder aufgetreten ist (KL-LZᵢ). Ist dies der Fall, so wird im Verfahrensschritt 33 der additiv korrigierte Zündwinkel des entsprechenden Leitzylinders ZWK(LZᵢ) aus der Summe des aktuellen Zündwinkels des Leitzylinders und der Spätverstellung (ZW(LZᵢ)+ZW(spät)) gebildet, wobei der aktuelle Zündwinkel der Kennfeldzündwinkel oder der im vorhergehenden bereits additiv korrigierte Zündwinkel sein kann. Ebenso wie der Zündwinkel des Leitzylinders wird nach einem Klopfereignis KL im Leitzylinder im Verfahrensschritt 34 der Zündwinkel der geführten Zylinder GZ nach spät verschoben. Die Spätziehung des Zündwinkels der geführten Zylinder GZ erfolgt hierbei aber nicht in einem Schritt wie beim Leitzylinder sondern, wie auch in Figur 2 gezeigt in mehreren Schritten sl, s2 und s3, was im Verfahresschritt mit dem Zusatz sx beim Spätverstellwert des Zündwinkels ZW(spät) verdeutlicht werden soll. Ein Ausgang des Verfahrensschrittes 33 ist außerdem an den Verfahrensschritt 35 geführt. Im Verfahrensschritt 35 wird aus den korrigierten Zündwinkeln der Leitzylinder i,j,k ein Führungszündwinkel FZW bestimmt, wobei der Führungszündwinkel FZW = f(ZWK(LZ_{i, j, k}) eine Funktion der Zündwinkel der Leitzylinder ist.

Wurde das im Verfahrensschritt 31 erfaßte Klopfereignis KL im Verfahrensschritt 32 nicht einem Leitzylinder zugeordnet, dann führt der Nein-Ausgang des Verfahrensschrittes 32 zum Verfahrensschritt 36. Hier wird der korrigierte Zündwinkel des geführten Zylinders ZWK(GZ) bestimmt, in dem Klopfen aufgetreten ist, wobei auch hier zum Zündwinkel des geführten Zylinders ZW(GZ) ein Zündwinkelspätverstellwert hinzuaddiert wird (ZW(GZ) + ZW(spät)).

Für den Fall, daß im Verfahrensschritt 31 beim aktuellen Zündvorgang kein Klopfen KL aufgetreten ist, wird im Verfahrensschritt 37 geprüft, ob dieser klopffreie Zündvorgang einem Leitzylinder zuordenbar ist. Ist dies der Fall, so wird in einem anschließenden Verfahrensschritt 38 abgefragt, ob der aktuelle Zündwinkel des Leitzylinders ZW(LZ) dem Kennfeldzündwinkel KZW entspricht. Ist dies nicht der Fall, so wird in einem anschließenden Verfahrensschritt 39 geprüft, ob bereits eine vorgebbare Anzahl n klopffreier Verbrennungen KL-frei stattgefunden hat. Ist dies der Fall, so wird im Verfahrensschritt 40 der Zündwinkel des Leitzylinder ZW(LZ) für eine Rückführung der Spätverstellung an den Kennfeldzündwinkel KZW um ein Inkrement INC in Richtung 'Früh' korrigiert. Ist noch keine vorgebbare Anzahl klopffreier Verbrennungen aufgetreten, wird der Zündwinkel beibehalten.

War die im Verfahrensschritt 31 als klopffrei erkannte Verbrennung nicht im Leitzylinder, sondern der ausgewertete Zündvorgang hat in einem geführten Zylinder (GZᵢ) stattgefunden, so wird im Verfahrensschritt 41 ausgewertet, ob der Zündwinkel des geführten Zylinders ZW(GZᵢ) größer oder gleich dem berechneten und mit dem Sicherheits-Offset ΔZW-OF beaufschlagen Führungszündwinkel ist, so daß gilt: ZW(GZᵢ) ≥ FZW + ΔZW-OF. In diesem Verfahrensschritt 41 wird damit geprüft, ob der Zündwinkel des geführten Zylinders sich vom Führungszündwinkel, welcher aus den Zündwinkeln des oder der Leitzylinder gebildet wird, lediglich um den Wert des Sicherheits-Offsets unterscheidet. Ist der Abstand vom Zündwinkel des geführten Zylinders zum Führungszündwinkel größer als dieses Sicherheits-Offset, dann führt der Ja-Ausgang des Verfahrensschrittes 41 zum Verfahrensschritt 42, in welchem kontrolliert wird, ob bereits eine vorgebbare Anzahl klopffreier Verbrennungen in diesem geführten Zylinder stattgefunden haben, so daß die früher erfolgte Spätverstellung des Zündwinkels im Verfahrensschritt 43 wieder abgeregelt werden und der Zündwinkel schrittweise um ein Inkrement INC in Richtung 'früh' verändert werden kann.

Wurde im Verfahrensschritt 41 festgestellt, daß der Zündwinkel des geführten Zylinders zum Führungszündwinkel nicht den Sicherheits-Offsets aufweist, dann führt der Nein-Ausgang zum Verfahrensschritt 44. In diesem Verfahrensschritt 44 wird ein korrigierter Zündwinkel für den geführten Zylinder ZWK(GZᵢ), der gerade ausgewertet wurde, berechnet, indem der vorherige Zündwinkel des geführten Zylinders ZW(GZᵢ) um einen Schritt sₓ nach Spät verstellt wird (ZWK(GZᵢ = ZW(GZᵢ) + sₓZW(spät)). Wurde in dem Verfahrensschritt 42 festgestellt, daß noch keine vorgebbare Anzahl n klopffreier Verbrennungen in diesem Zylinder aufgetreten ist, so erfolgt noch keine Rückregelung in Richtung "früh" und der vorherige Zündwinkel wird beibehalten.

Je nachdem, ob und in welchem Zylinder ein Klopfereignis aufgetreten ist, wird damit ein entsprechender Pfad des Programmablaufs zur Bestimmung der Zündwinkel durchlaufen. In jedem Fall steht jedoch am Ende des Verfahrens ein Zündwinkel des ausgewerteten Zylinders für den darrauffolgenden Zündvorgang in diesem Zylinder fest.

Hierfür werden die Ausgänge der Verfahrensschritte 33, 38, 39 und 40 an einen Verfahrensschritt 45 geführt, in welchem der ermittelte Zündwinkel für den Leitzylinders ZW(LZ) abgespeichert wird.

Ebenso sind die Ausgänge der Verfahrensschritte 34, 36, 42, 43 und 44 an den Verfahrensschritt 46 geführt, in welchem der Zündwinkel für den betrachteten geführten Zylinder ZW(GZᵢ) als Zündwinkel für den darauffolgenden Zündvorgang in diesem Zylinder abgespeichert wird.

Beide Verfahrensschritte 45 und 46 sind in einem Verfahrensschritt 47 zusammengeführt und das Verfahren beginnt für den nächsten Zündvorgang von Neuem.

## Patentansprüche

1. Verfahren zur Klopfregelung in Mehrzylinder-Brennkraftmaschinen, wobei jeweils einer Gruppe von Zylindern ein Klopfsensor zugeordnet ist, der die Klopfsignale aller Verbrennungen in den Zylindern einer Gruppe erfaßt und einem Steuergerät zuführt, wobei das Steuergerät die Steuergrößen der Zündung für die einzelnen Zylinder in einen Bereich geringer Drehzahl aufgrund der Klopfereignisse in den einzelnen Zylindern zylinderselektiv festlegt, wobei das Steuergerät in einem Bereich hoher Drehzahl mindestens ein Zylinder der jeweiligen Gruppe als Leitzylinder ausgewählt und wobei der Leitzylinder (LZ) mit einem Zündwinkel (ZW(LZ)) angesteuert wird, der im Vergleich zu den Zündwinkeln der anderen Zylinder (GZ) dichter an der Klopfgrenze liegt, und wobei bei einem Klopfereignis im Leitzylinder (KL-LZ) eine Spätverstellung des Zündwinkels (ZW(spät)) für den Leitzylinder (LZ) und für die anderen Zylinder (GZ) der Gruppe erfolgt.

2. Verfahren nach Anspruch 1, **dadurch gekennzeichnet, daß** bei einem Klopfereignis in einem der anderen Zylinder (KL-GZ) nur eine Spätverstellung in diesem Zylinder erfolgt.

3. Verfahren nach Anspruch 2, **dadurch gekennzeichnet, daß** Zündwinkel des mindestens einen Leitzylinders zur Bestimmung der Zündwinkel der anderen Zylinder mit einem Sicherheits-Offset (ΔZW-OF) in Richtung von der Klopfgrenze weg beaufschlagt wird.

4. Verfahren nach einem der vorherigen Ansprüche, **dadurch gekennzeichnet, daß** die Spätverstellung des Zündwinkels der anderen Zylinder (ZW(GZ)) nach einem Klopfereignis (KL) im Leitzylinder (LZ) in mehreren kleineren Schritten (s1,s2,s3) erfolgt.

5. Verfahren nach einem der vorherigen Ansprüche, **dadurch gekennzeichnet, daß** die Spätverstellung (ZW(spät)) des Zündwinkels des Leitzylinders (ZW(LZ)) nach einem Klopfereignis (KL) im Leitzylinder (LZ) in einem einzigen Schritt erfolgt.

6. Verfahren nach einem der vorherigen Ansprüche, **dadurch gekennzeichnet, daß** aus der Gruppe von Zylindern mehrere Leitzylinder, insbesondere die Zylinder, die vom Klopfsensor am besten gehört werden, ausgewählt werden.

## Claims

1. Method for controlling knocking in multicylinder internal combustion engines, in each case a group of cylinders being assigned a knocking sensor which senses the knocking signals of all the combustion processes in the cylinders of a group and feeds them to a controller, the controller defining the control variables of the ignition for the individual cylinders in a region of low rotational speed on the basis of the knocking results in the individual cylinders on a cylinder-selective basis, the controller selecting at least one cylinder of the respective group as the lead cylinder in a region of high rotational speed and the lead cylinder (LZ) being actuated with an ignition angle (ZW(LZ)) which is closer to the knocking limit in comparison with the ignition angles of the other cylinders (GZ), and the ignition angle (ZW (retarded)) for the lead cylinder (LZ) and for the other cylinders (GZ) of the group being adjusted in the retarded direction when there is a knocking event in the lead cylinder (KL-LZ).

2. Method according to Claim 1, **characterized in that**, when there is a knocking event in one of the other cylinders (KL-GZ), an adjustment in the retarded direction takes place only in this cylinder.

3. Method according to Claim 2, **characterized in that** a safety offset (ΔZW-OF) is applied to the ignition angle of the at least one lead cylinder in the direction away from the knocking limit in order to determine the ignition angles of the other cylinders.

4. Method according to one of the preceding claims, **characterized in that** the adjustment of the ignition angle of the other cylinders (ZW(GZ)) in the retarded direction is carried out in a plurality of relatively small steps (s1, s2, s3) after a knocking event (KL) in the lead cylinder (LZ).

5. Method according to one of the preceding claims, **characterized in that** the adjustment (ZW(retarded)) of the ignition angle of the lead cylinder (ZW(LZ)) in the retarded direction is carried out in a single step after a knocking event (KL) in the lead cylinder (LZ).

6. Method according to one of the preceding claims, **characterized in that** a plurality of lead cylinders, in particular the cylinders which are perceived best by the knocking sensor, are selected from the group of cylinders.

## Revendications

1. Procédé de réglage du cliquetis dans des moteurs à combustion interne à plusieurs cylindres
selon lequel
on associe un capteur de cliquetis à un groupe de cylindres pour saisir les signaux de cliquetis de toutes les combustions dans les cylindres d'un groupe et l'appliquer à un appareil de commande,
l'appareil de commande sélectionne comme cylindre pilote au moins un cylindre de chaque groupe dans une plage de vitesse de rotation élevée, et
le cylindre pilote (LZ) est commandé avec un angle d'allumage (ZW(LZ)), qui est plus proche de la limite de cliquetis par comparaison aux angles d'allumage des autres cylindres (GZ), et
en cas de cliquetis dans le cylindre pilote (KL-LZ), on effectue un réglage dans le sens du retard de l'angle d'allumage (ZW(retard)) pour le cylindre pilote (LZ) ainsi que pour les autres cylindres (GZ) du groupe.

2. Procédé selon la revendication 1,
**caractérisé en ce qu'**
en cas de cliquetis dans un autre cylindre (KL-GZ) on ne règle un retard que dans ce cylindre.

3. Procédé selon la revendication 2,
**caractérisé en ce que**
l'angle d'allumage d'au moins un cylindre pilote reçoit un décalage de sécurité (ΔZW-OF) pour s'écarter de la limite de cliquetis, et déterminer l'angle d'allumage des autres cylindres.

4. Procédé selon l'une des revendications précédentes,
**caractérisé en ce que**
le réglage dans le sens du retard de l'angle d'allumage de l'autre cylindre (ZW(GZ)), après un cliquetis (KL) dans le cylindre pilote (LZ), se fait en plusieurs petites étapes (si, s2, s3).

5. Procédé selon l'une des revendications précédentes,
**caractérisé en ce que**
le réglage dans le sens du retard (ZW(retard)) de l'angle d'allumage du cylindre pilote (ZW(LZ) se fait après un cliquetis (KL) dans le cylindre pilote (LZ) au cours d'une seule étape.

6. Procédé selon l'une des revendications précédentes,
**caractérisé en ce qu'**
on sélectionne dans le groupe des cylindres, plusieurs cylindres pilotes, notamment les cylindres dans lesquels le capteur de cliquetis a le mieux fonctionné.
